# EUROPEAN PATENT APPLICATION

(11) **EP 0 575 814 A1**
(43) Date of publication of application: **29.12.1993**
(21) Application number: 93109217.5
(22) Date of filing: 08.06.1993
(51) Int. Cl.: G01S 13/93, H01Q 1/32

(54) **Microwave distance sensor for parking vehicles**

(30) Priority: 09.06.1992 IT TO920493
(71) Applicant: CENTRO RICERCHE FIAT Società Consortile per Azioni, I-10043 Orbassano (Torino) (IT); SMA SEGNALAMENTO MARITTIMO ED AEREO S.p.A., I-50124 Firenze (IT)
(72) Inventor: Ansaldi, Ermanno, I-10100 Torino (IT); Re Fiorentin, Stefano, I-10095 Grugliasco (IT); Preti, Giampaolo, I-50100 Firenze (IT); Soldani Benzi, Massimo, I-50100 Firenze (IT)
(74) Representative: Cerbaro, Elena

(57) **Abstract**

A distance sensor (10) comprising an antenna element (11); a transmitting/receiving unit (12) connected to the antenna element; and a processing unit (13) connected to the transmitting/receiving unit, for detecting the presence and determining the distance of obstacles within the operating range of the antenna. The antenna element (11) consists of a planar microstrip element formed on a flexible printed circuit on a dielectric support (16) and housed inside and over the entire length of the vehicle bumper (14).

## Description

The present invention relates to a microwave distance sensor for parking vehicles.

Over the past few years, various types of parking-assist systems have been devised for informing the driver of the presence, and possibly also the distance, of obstacles in front or behind the vehicle, and based on the following types of technology:
- Laser beam: this is often used for both long and short distance measurements, but, being a focused beam, requires an electrooptical interlock to deviate the beam and so cover a given optical range. To cover the entire area in front and behind the vehicle, a number of laser transducers are required, so that the overall cost of the system is considerable.
- Infrared rays: these are normally used for remote-controlled systems, but are poorly suited for distance measurements by virtue of absorption and reflection of the rays depending closely on the optical characteristics of the reflecting medium and, in the case in question, on atmospheric conditions. Moreover, infrared-ray sensors are sensitive to fouling which seriously affects their performance.
- Ultrasonic waves: normally operated at frequencies of roughly 40 KHz, these are fairly effective in detecting short to medium distance objects (up to 3-4 m), but require a number of transducers for covering the entire operating area. Moreover, these too are sensitive to atmospheric conditions, and operate poorly in the presence of wind and/or rain.
- Telecameras: in addition to being expensive, telecamera systems fail to provide for accurate distance measurement, and also pose problems as regards installation and cleaning of the lens.

The above systems are also difficult to install, by virtue of being fitted to the outside of the bumper, which must thus be drilled.

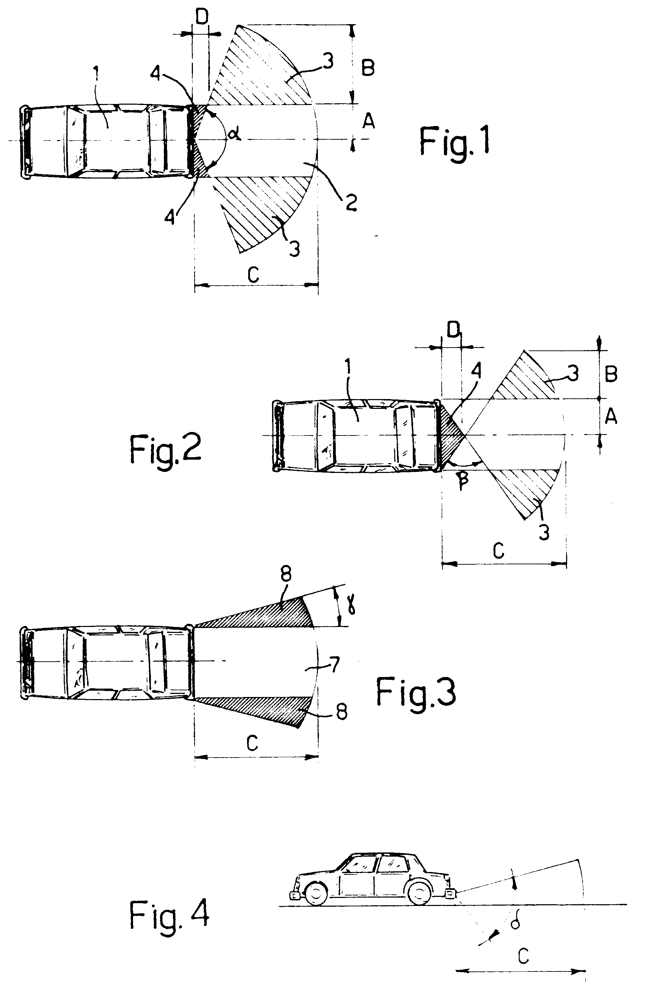

In addition to the above systems, microwave sensors have also been devised, often featuring active devices designed for other purposes (such as gunnplexers) or horn antennas with respective measuring channels and fitted to the bumper. Besides failing to solve the installation problems typical of other techniques, current microwave solutions also fail to provide for sufficient coverage, in the case of parking applications, as shown in Fig.s 1 to 4. Fig.1 shows the coverage of a single horn antenna fitted to the center of the bumper of a vehicle 1, and which comprises a useful portion 2; two hatched lateral interference portions 3; and two closely hatched blind portions 4. The lateral interference portions are those which are actually "viewed" by the antenna, but to no purpose, in that any obstacles in these areas in no way impede parking of the vehicle and, when detected, far from assisting the driver, represent a false alarm. Conversely, blind portions 4 are those which are not viewed by the antenna, whereas the detection of any obstacles in these areas would indeed be of assistance to the driver. By way of example, the following are a few dimensions of the coverage shown. The useful portion consists of a rectangle measuring A = 85 cm by C = 3 m, minus triangular blind portions 4, side D of which measures 30 cm; the antenna presents a flare angle α of 140°; and length B is 2 m. As can be seen, the area of lateral portions 3 is extensive, thus resulting in numerous false alarms; while the area of blind portions 4 is also other than negligible, thus resulting in frequent alarm failure and consequently poor reliability of the known solution.

In the case of two horn antennas fitted to either end of the bumper as shown in Fig.2, wherein A = 85 cm, B = 1.1 m, C = 3 m, D = 30 cm and β = 70°, the area of lateral false alarm portions 3 is smaller than in Fig.1, though still considerable, while that of blind portion 4, despite the difference in shape, is substantially the same as in Fig.1, so that, in this case also, the antennas fail to provide for a good degree of reliability.

Now compare Fig.s 1 and 2 with Fig.3, which shows the range which should ideally be covered by a parking antenna for supplying none other than information of assistance to the driver. In Fig.3, the minimum ideal range 7 is substantially in the form of a rectangle of length C = 3 m and a width roughly equal to that of vehicle 1 (1.7 m), with possibly two flared lateral portions 8 of roughly 15° for steering purposes. Fig.4 shows the vertical flare of current antennas. As can be seen, the achievable flare angle (δ = 70°) is more than sufficient, so that current antennas are oriented downwards, and Fig.4 may also be said to represent the volume covered by a real antenna or sensor.

It is an object of the present invention to provide a low-cost parking sensor designed to approximate more closely the ideal volume required for parking purposes, and so minimise false alarms and alarm failure.

According to the present invention, there is provided a microwave distance sensor for parking vehicles, the sensor comprising at least one antenna element; at least one transmitting and receiving unit connected to said antenna element; and a processing unit connected to said transmitting and receiving unit, and which provides for detecting the presence and determining the distance of obstacles; characterized by the fact that said antenna element consists of an elongated planar element of a length equal to at least half the width of the vehicle.

A preferred non-limiting embodiment of the present invention will be described by way of example with reference to the accompanying drawings, in which:
Fig.s 1 and 2 show the coverage of known types of sensors;
Fig.s 3 and 4 show the coverage of an ideal sensor;
Fig.5 shows a view in perspective of a bumper fitted with the sensor according to the present invention;
Fig.s 6 and 7 show two possible ways of housing the sensor according to the present invention;
Fig.8 shows an operating diagram of the sensor according to the present invention;
Fig.9 shows a front view of a specific embodiment of the antenna portion of the sensor according to the present invention.

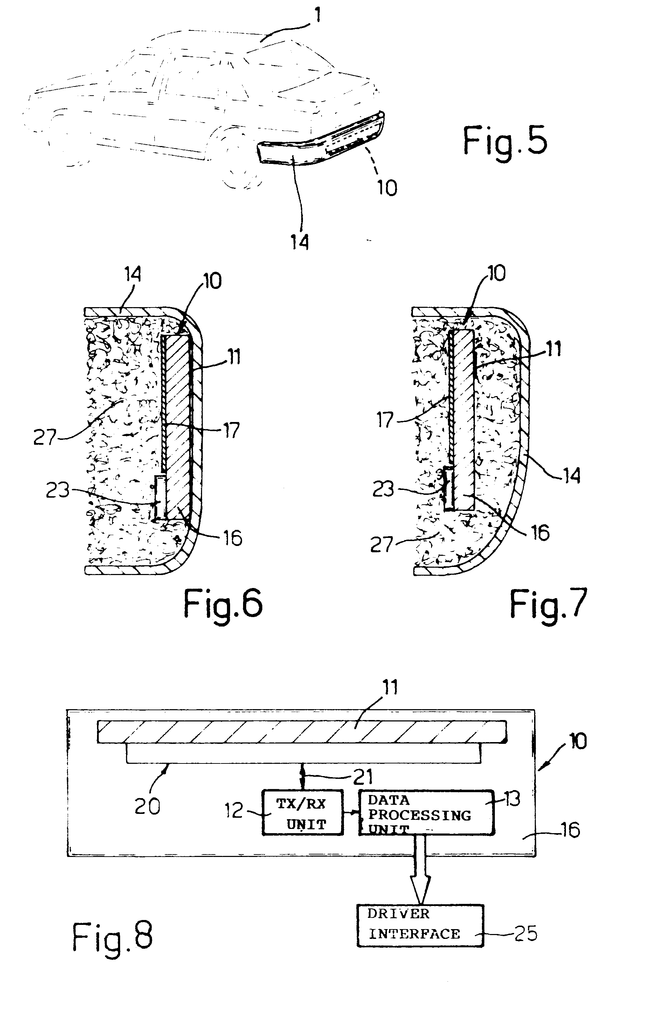

As shown in Fig.s 5 to 8, the sensor 10 according to the present invention comprises an antenna 11, a transmitting/receiving unit 12, and a data processing unit 13, all fitted inside the rear bumper 14 of a vehicle 1. Herein, the term "bumper" is intended to mean both the shield type element normally fitted to automobiles, as shown in the Fig.5-7 example, and the flat or rearward-facing C-shaped collision bar required by law on industrial vehicles.

According to the present invention, antenna 11 is a planar type consisting of a microstrip preferably extending over the entire length or at least a substantial portion of the length of bumper 14. Antenna 11 is conveniently in the form of a flexible printed circuit, in the form of a metal strip on the front side of a support 16 of dielectric material, e.g. vetronite, the rear side of which presents a metal layer 17 for enabling propagation of the electric field. Said rear side is fitted with the other components of sensor 10, i.e. units 12 and 13, defining the component portion 23 of sensor 10, which component portion may be formed, for example, in hybrid technology, and bonded to insulating support 16, for example, in a portion devoid of the metal layer.

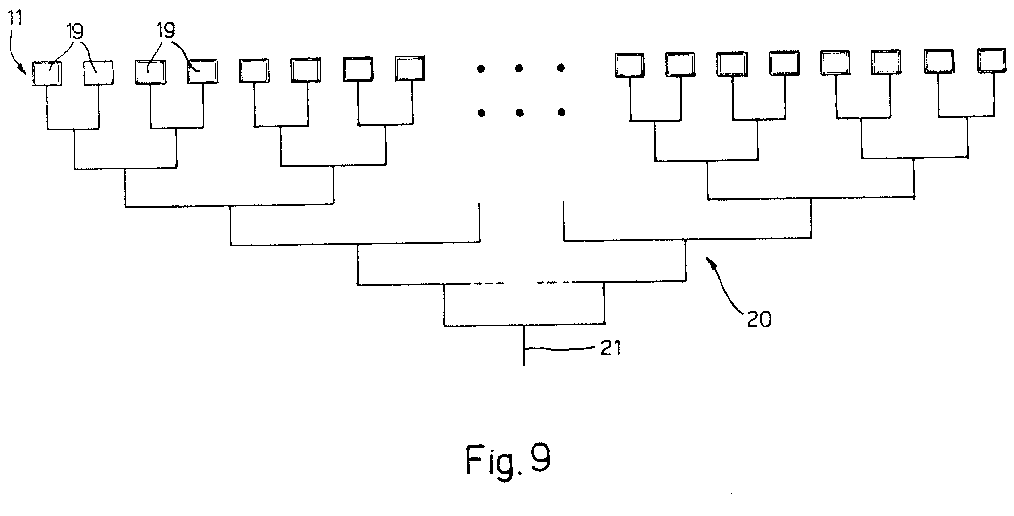

As shown in Fig.9, antenna 11 preferably consists of a number of adjacent, aligned radiating elements 19 supplied uniformly, for example, by a tree connection 20, each branch of which is divided uniformly into two parallel sub-branches, and which terminates with a single conductor 21 connected to transmitting/receiving unit 12. Both radiating elements 19 and connection 20 are preferably formed by selective chemical removal (photoengraving) of portions of a metal layer originally provided on the front face of support 16.

The shape and size of radiating elements 19 depend on the required microwave radiation characteristics and frequency. In the example shown, elements 19 are rectangular, and the operating frequency, ranging between 8 and 12 GHz, is preferably about 10 GHz for enabling troublefree component integration and low cost.

Connection 20 extends as far as unit 12, which provides for supplying radiating elements 19 and for picking up the signal received by elements 19 and as reflected by any obstacles within the controlled range. As unit 12, like processing unit 13, is housed on the rear side of support 16 (component portion 23 in Fig.s 6 and 7), connection 20 extends either through or about support 16.

Unit 12 is also connected to processing unit 13 which it supplies with electric signals corresponding to the signal picked up by antenna 11, and which are processed by unit 13 to determine the presence and distance of any obstacles within the controlled range. The result of said processing is sent by unit 13 to a driver interface 25 comprising, for example, a known optical and/or acoustic signalling system.

As shown in Fig.s 6 and 7, sensor 10 is mounted inside bumper 14 with the front face, fitted with radiating elements 19, facing the inner surface of the bumper. In particular (Fig.6), sensor 10 is fitted directly on to the inner surface of bumper 14, and the absorbent material 27 (usually foam) with which the bumper is normally lined extends behind sensor 10. In Fig. 7, sensor 10 is embedded inside material 27 and is detached from the inner surface of the bumper. The Fig.6 mounting provides for extremely straightforward assembly and maximum efficiency of the sensor, while that of Fig.7 provides for better support and protection of the sensor, in addition to troublefree assembly and a high degree of efficiency.

The advantages of the sensor according to the present invention will be clear from the foregoing description. Firstly, it provides for achieving the required coverage, by virtue of antenna 11 consisting of a planar element extending along the bumper and so producing, as opposed to a diverging beam, a microwave beam extending transversely in relation to antenna 11 and corresponding to portion 7 in Fig.3. Lateral portions 8 are formed automatically in the event, as is now customary, of a slightly curved bumper 14, by virtue of flexible support 16 following the curve.

Secondly, the sensor is cheap to produce and install, by virtue of the low-cost components involved, the straightforward design of antenna 4, and troublefree fitment of the sensor, which entails no alterations to the bumper or other parts of the vehicle, such as drilling.

Thirdly, the sensor according to the present invention provides for a high degree of efficiency and reliability, by being practically unaffected by atmospheric conditions, and by being housed inside the bumper and so protected against external agents, in particular fouling, which may eventually affect performance.

To those skilled in the art it will be clear that changes may be made to the sensor as described and illustrated herein without, however, departing from the scope of the present invention. For example, changes may be made to the number and shape of radiating elements 19, which, as opposed to rectangular, may be square, circular, triangular, pentagonal, elliptical, annular, or in the form of a sector, half disk, elliptical ring or slotted disk, providing the shape is compatible with the application in question. Instead of or in addition to being fitted inside the rear bumper, the sensor may also be fitted inside the front bumper, or even outside the bumper, though this would entail sacrificing some of the advantages described above. For example, the sensor may be fitted to the vehicle body close to the bumper, or, as already stated, close to or actually on the collision bar of industrial vehicles.

Instead of a single transmitting/receiving antenna, provision may be made for two separate antennas, one for transmitting and the other for receiving; and the antenna/s may feature one or more rows of radiating elements, with a single- or multilayer supply system.

## Claims

1. A microwave distance sensor (10) for parking vehicles, the sensor (10) comprising at least one antenna element (11); at least one transmitting and receiving unit (12) connected to said antenna element; and a processing unit (13) connected to said transmitting and receiving unit, and which provides for detecting the presence and determining the distance of obstacles; characterized by the fact that said antenna element (11) consists of an elongated planar element of a length equal to at least half the width of the vehicle.

2. A sensor as claimed in Claim 1, characterized by the fact that said planar element (11) consists of a metal microstrip formed by a number of adjacent radiating elements (19).

3. A sensor as claimed in Claim 2, characterized by the fact that it comprises a tree connection (20) interposed between said transmitting and receiving unit (12) and said radiating elements (19); said connection being formed by conductor portions, each divided into a pair of parallel conductor portions between said transmission and receiving unit and said radiating elements, for supplying said radiating elements.

4. A sensor as claimed in one of the foregoing Claims from 1 to 3, characterized by the fact that said planar element (11) is fittable close to the bumper element (14) of the vehicle, and substantially over the entire width of the vehicle.

5. A sensor as claimed in one of the foregoing Claims from 1 to 4, characterized by the fact that said planar element (11) is fittable inside the bumper (14) of the vehicle.

6. A sensor as claimed in Claim 5, characterized by the fact that said antenna element (11) is fittable contacting the inner surface of the bumper (14).

7. A sensor as claimed in Claim 5, characterized by the fact that said antenna element (11) is fittable some distance from the inner surface of the bumper (14) and embedded in foam material (27).

8. A sensor as claimed in one of the foregoing Claims from 1 to 7, characterized by the fact that said planar element (11) extends on a first face of a flexible dielectric support (16) facing outwards of the vehicle.

9. A sensor as claimed in Claim 8, characterized by the fact that said dielectric support (16) presents a second face opposite the first face and having a metal layer (17).

10. A sensor as claimed in Claim 9, characterized by the fact that said transmitting and receiving unit (12) and said processing unit (13) are located on said second face of said dielectric support (16).

11. A sensor as claimed in one of the foregoing Claims from 1 to 10, characterized by the fact that said antenna element (11) emits electromagnetic waves at a frequency preferably ranging from 8 to 12 GHz.

12. A bumper element, characterized by the fact that it comprises a sensor (10) as claimed in one of the foregoing Claims from 1 to 11.
